# EUROPÄISCHE PATENTSCHRIFT

(11) **EP 2 012 901 B1**
(45) Veröffentlichungstag und Bekanntmachung des Hinweises auf die Patenterteilung: **25.04.2012**
(21) Anmeldenummer: 07728765.4
(22) Anmeldetag: 03.05.2007
(51) Int. Cl.: B01D 33/11

(54) **VERFAHREN UND VORRICHTUNG ZUM ABTRENNEN GROBER FESTSTOFFE AUS EINEM VISKOSEN FLUID**
PROCESS AND APPARATUS FOR REMOVING COARSE SOLIDS FROM A VISCOUS FLUID
PROCEDE ET DISPOSITIF DE SEPARATION DE SOLIDES GROSSIERS D'UN FLUIDE VISQUEUX

(30) Priorität: 04.05.2006 DE 102006020990
(43) Veröffentlichungstag der Anmeldung: 14.01.2009
(73) Patentinhaber: Huber SE, 92334 Berching (DE)
(72) Erfinder: BRANNER, Wolfgang, 92334 Berching (DE)
(74) Vertreter: Bergmeier, Werner
(86) Internationale Anmeldenummer: PCT/EP2007/054312
(87) Internationale Veröffentlichungsnummer: WO 2007/128778

(56) Entgegenhaltungen:
- DE-A1- 3 210 385
- DE-A1- 4 342 808
- FR-A- 358 102
- FR-A1- 2 798 080
- US-A- 3 401 801

## Beschreibung

Die vorliegende Erfindung betrifft ein Verfahren zum Abscheiden grober Feststoffe aus einem viskosen Fluid, insbesondere aus einem Schlamm, sowie eine Vorrichtung zur Durchführung dieses Verfahrens.

Bei dem viskosen Fluid kann es sich beispielsweise um einen Schlamm handeln, wie er in der Abwassertechnik anfällt. Insbesondere kann es sich um Fäkalschlamm handeln, der z. B. aus Hauskläranlagen abgesaugt wird und üblicherweise mit Tankfahrzeugen zu einer Anlage transportiert wird, wo er behandelt wird. Bei der Anlage kann es sich um eine Kläranlage handeln, aber auch um eine besondere Anlage für die Fäkalschlammbehandlung. Klärschlamm und Fäkalschlamm ist eine wässrige Suspension mehr oder weniger feiner organischer und mineralischer Feststoffe, die aber auch grobe Feststoffe wie Sand, Kies oder Steine enthalten kann, die bei der Behandlung stören und einen hohen Verschleiß an den Anlagenkomponenten verursachen. Weitere grobe Feststoffe sind Papier, Lumpen und Hygieneartikel wie Damenbinden oder Kondome, die Verstopfungen oder Verzopfungen in der Behandlungsanlage verursachen können.

Andererseits kann es sich jedoch bei dem viskosen Fluid auch um industriell erzeugte bzw. anfallende Flüssigkeiten handeln, die grobe Feststoffe enthalten, die abgetrennt werden sollen, beispielsweise um auspolymerisierte grobe Feststoffe in einer Monomere enthaltenden Flüssigkeit oder aber um eine mineralische Suspension, die grobe Feststoffe wie Steine enthält, oder um eine biologische Suspension, z. B. eine Pulpe aus einer Vergärung.

Die Viskosität (Zähigkeit) derartiger Fluide ist jedenfalls erheblich höher als diejenige von Wasser, wobei hier nicht die Viskosität der Flüssigkeit selbst gemeint ist, sondern die scheinbare Viskosität oder Strukturviskosität von Suspensionen oder Emulsionen.

Es ist bekannt, Siebtrommeln zum Abscheiden grober Feststoffe aus Abwasser einzusetzen. Es sind Siebtrommel bekannt, die um eine horizontale oder geneigte Achse rotieren und denen Abwasser zugeführt wird, das durch in einem rotierenden Mantel der Siebtrommel angeordnete Öffnungen der Siebtrommel fließt, wobei die groben Feststoffe in der Siebtrommel zurückgehalten werden.

Beschrieben wird eine derartige Trennvorrichtung beispielsweise in der US 3,401,801 A. Um sicherzustellen, dass die zylindrisch geformte Siebtrommel nicht durch vorhandene Feststoffe verstopft, sind Düsen vorgesehen, mit deren Hilfe eine Flüssigkeit von außen auf den Siebmantel gespritzt werden kann.

Bei Abwasser handelt es sich allerdings um ein vergleichsweise feststoffarmes Fluid geringer Viskosität, die nur geringfügig höher ist als die von reinem Wasser. Deshalb fließt Abwasser ohne großen Widerstand durch Öffnungen im Mantel der Siebtrommel hindurch. Die in der Siebtrommel zurückgehaltenen Grobstoffe werden durch die Rotation des Mantels mitgenommen, um sich am Scheitelpunkt abzulösen und in einen axial angeordneten Trog zu fallen, aus dem sie durch eine rotierende Schnecke axial ausgetragen werden. Bei einem Fluid mit hoher Viskosität funktionieren derartige Siebtrommeln schlecht, weil zum einen die Grobstoffe so fest am Mantel haften, dass sie sich von diesem nicht ablösen und in den Trog fallen, und weil zum anderen ein großer Teil des viskosen Fluids ebenfalls am Mantel der Siebtrommel haften bleibt und in den Trog gelangt, so dass der Trenngrad sehr schlecht ist.

Aus diesem Grund werden zum Abtrennen grober Stoffe aus viskosen Fluiden wie Schlämmen feststehende Rechentrommeln mit umfänglich angeordneten Schlitzen verwendet, wobei die an den Schlitzen zurückgehaltenen groben Feststoffe mittels eines rotierenden Kammes entlang der Schlitze zum Scheitel der Rechentrommel geschoben werden, wo sie durch einen weiteren feststehenden Kamm vom rotierenden Kamm abgelöst werden und in den axial angeordneten Trog fallen.

Derartige feststehende Siebtrommel haben allerdings den Nachteil, dass sie insbesondere durch faserige Stoffe wie Lumpen, Haare oder Damenbinden verzopfen, wobei sich diese insbesondere um den rotierenden Kamm und seinen Antrieb wickeln, so dass sie störanfällig sind und häufig händisch gereinigt werden müssen. Ein weiterer Nachteil besteht darin, dass die Stege und Kämme einem hohen Verschleiß ausgesetzt sind, der durch Reibung von Sand und andere im viskosen Fluid enthaltene mineralische Stoffe verursacht wird. Ein weiterer Nachteil ist, dass diese feststehenden Siebtrommeln zur Vermeidung von Geruchsemissionen in der Regel in quaderförmigen geschlossenen Behältern angeordnet werden, so dass Sinkstoffe, insbesondere Sand und Steine sich auf dem Boden und insbesondere in den Ecken der Behälter ansammeln und regelmäßig entfernt werden müssen, wobei der Zugang zu den geschlossenen Behältern schwierig ist.

Es ist weiterhin bekannt, Feststoffgemische wie Abfall, Kompost oder Strassenkehricht zur Abtrennung von Grobstoffen in eine rotierende Siebtrommel an einer Stirnseite einzugeben. Feststoffe geringer Größe fallen durch Öffnungen im Mantel der Siebtrommel. Ein wendelförmiges Blech ist mit dem rotierenden Mantel der Siebtrommel verbunden, um die zurückgehaltenen Grobstoffe nach dem Prinzip einer archimedischen Schnecke zu der entgegengesetzten Stirnseite zu fördern und dort auszutragen. Allerdings handelt es sich bei derartigen Feststoffgemischen nicht um ein Fluid und nicht um eine Suspension, sogar dann nicht, wenn das Feststoffgemisch feucht ist oder diesem Waschwasser zum Waschen der zurückgehaltenen Grobstoffe zugeführt wird. Es handelt sich um mehr oder weniger feuchte Feststoffe, nicht aber um ein viskoses Fluid. Waschwasser, sofern es zugegeben wird, ist eine niedrig-viskose Flüssigkeit, die leicht durch die Öffnungen der Siebtrommel abfließt.

Aus der US 2,983,378 ist eine Waschtrommel zum Reinigen und Trennen von Betonbestandteilen bekannt. Der Beton ist in der Regel sehr gleichförmig und kann dadurch gut in seine Bestandteile aufgeteilt werden. Die festen Bestandteile werden schließlich mittels einer Sprüheinrichtung gewaschen bevor sie die Trommel verlassen. Für das Abscheiden grober und insbesondere sehr unterschiedlicher Feststoffe aus einem viskosen Fluid, wie es bei Abwasser vorliegt, ist diese Waschtrommel nicht geeignet. Die Feststoffe in Verbindung mit dem Fluid würden die Öffnungen der Waschtrommel sehr schnell verschließen.

Aufgabe der vorliegenden Erfindung ist es, ein Verfahren und eine Vorrichtung zur Durchführung des Verfahrens zur Verfügung zu stellen, bei denen die genannten Nachteile des Standes der Technik vermieden werden. Insbesondere soll ein guter Trenngrad zwischen den groben Feststoffen und dem viskosen Fluid erreicht werden, in anderen Worten, dass nur wenig viskoses Fluid mit den abgetrennten groben Stoffen ausgetragen wird. Weiterhin sollen das Verfahren und die Vorrichtung einfach, wirtschaftlich, betriebsicher und wartungsarm sein. Die Vorrichtung soll verschleißarm sein und weder verstopfen noch verzopfen.

Die Aufgabe wird durch ein Verfahren und eine Vorrichtung mit den Merkmalen der unabhängigen Ansprüche gelöst.

Das viskose Fluid und die in diesem enthaltenen groben Feststoffe einer um eine horizontale oder geneigte Achse rotierende Siebtrommel werden insbesondere durch ein zulaufseitiges Ende der Siebtrommel zugeführt. Das viskose Fluid läuft durch in einem rotierenden Mantel der Siebtrommel angeordnete Öffnungen der Siebtrommel ab und die groben Feststoffe werden in der Siebtrommel zurückgehalten und durch ein in der Siebtrommel mit dem rotierenden Mantel verbundenes wendelförmiges Blech zu einer Austragsstelle, insbesondere zu einem austragseitigen Ende der Siebtrommel gefördert. Die Feststoffe können dort ausgeworfen werden. Durch eine Reinigungsvorrichtung, welche auf die Siebtrommel einwirkt, werden Verstopfungen und Verzopfungen durch die Feststoffe und das viskose Fluid zuverlässig vermieden. Die Reinigungsvorrichtung stellt sicher, dass die Öffnungen der Siebtrommel nicht verschlossen werden und der Abscheidevorgang auch bei schwierigsten Materialien zuverlässig stattfindet.

Obwohl die einzelnen Elemente des erfindungsgemäßen Verfahrens für andere Anwendungen bekannt sind, bietet deren Kombination und Anwendung für die Abtrennung von Grobstoffen aus viskosen Fluiden wie Schlämmen besondere Vorteile. Die Zuführung des viskosen Fluids beispielsweise durch eine Stirnseite der Siebtrommel vermeidet Ablagerungen von Sinkstoffen vor der Siebtrommel und Kurzschlussströmung. Durch die Rotation der Trommel um ihre horizontale oder geneigte Achse werden dem Fluid kontinuierlich freie Öffnungen zum Hindurchfließen zugeführt. Dies ist beispielsweise auch einer von mehreren Unterschieden zu einer Zentrifuge, welche durch ihre hohe Drehzahl das Material an ihre Umfangswand presst. Bei der erfindungsgemäßen Vorrichtung wird das Material hingegen in der Regel immer neuen Öffnungen zugeführt. Die Schwerkraft wirkt stärker als die Zentrifugalkraft.

Wenn die Achse der Siebtrommel zum Austrag hin steigend ist, so wird durch die Höhe der Austragsstelle der Austrag und die Weiterförderung der ausgetragenen Grobstoffe erleichtert. Das wendelförmige Blech transportiert die zurückgehaltenen Grobstoffe auf schonende und verschleißarme Weise zur Austragsstelle, ohne dass ein besonderer Antrieb benötigt wird. Das wendelförmige Blech verhindert, dass Fluid zur Austragsstelle für die Grobstoffe fließen kann. Das wendelförmige Blech bietet keine Ansätze für Verzopfungen durch Faserstoffe.

Erfindungsgemäß werden die in der Siebtrommel zurückgehaltenen groben Feststoffe gewaschen. Als Waschflüssigkeit wird normalerweise die flüssige Phase des Fluids verwendet; beispielsweise wird bei Fäkalschlamm Wasser als Waschflüssigkeit verwendet, da die flüssige Phase von Fäkalschlamm Wasser ist. Durch das Waschen der zurückgehaltenen Grobstoffe wird der Trenngrad des Verfahrens wesentlich verbessert, d.h. es werden nur sehr wenig Fluid und darin enthaltene Verunreinigungen wie Fäkalstoffe mit den Grobstoffen ausgetragen.

Die groben Feststoffe werden innerhalb der Siebtrommel während ihrer Abförderung und vor ihrem Austrag gewaschen. Verzugsweise läuft die Waschflüssigkeit durch die Öffnungen im Mantel der Siebtrommel ab. Hierdurch wird der zusätzliche Aufwand für das Waschen sehr gering gehalten und auf die Zuführung und das Verspritzen des Waschwassers beschränkt.

In besonderen Fällen ist es sehr vorteilhaft, wenn die abgelaufene Waschflüssigkeit getrennt vom abgelaufenen viskosen Fluid aufgefangen und abgeführt wird. Dadurch wird eine Verdünnung des Fluids durch ablaufende Waschflüssigkeit vermieden, was beispielsweise dann wichtig ist, wenn Fäkalschlamm direkt einer Schlammbehandlung zugeführt wird, z. B. einem Faulbehälter. Dieses Merkmal ist auch dann besonders wichtig, wenn die Waschflüssigkeit nicht identisch mit der flüssigen Phase des viskosen Fluids ist oder wenn das Fluid ein Wertstoff ist, der nicht durch Waschflüssigkeit verdünnt werden soll.

Gemäß einer weiteren Ausgestaltung der Erfindung werden die aus der Siebtrommel ausgetragenen groben Feststoffe gepresst, um möglichst viel Fluid oder Waschflüssigkeit zu entfernen und um den Feststoffgehalt der Grobstoffe zu steigern. Das kann in einer Waschpresse bekannter Art erfolgen. In vorteilhafter Weise ermöglicht das erfindungsgemäße Verfahren, dass das viskose Fluid und die in diesem enthaltenen groben Feststoffe der Siebtrommel chargenweise zugeführt werden. Insbesondere Fäkalschlamm wird chargenweise in Tankfahrzeugen angeliefert, wobei es wichtig ist, die Tankfahrzeuge zur Verminderung deren Verweilzeit schnell entleeren zu können. Die zulaufseitigen Zwischenräume zwischen dem wendelförmigen Blech können mit einem großen Volumen in kürzester Zeit gefüllt werden, wobei das zugeführte viskose Fluid einen Zwischenraum nach dem anderen füllt, ohne dass es zu einem Durchfließen des Fluids zum austragsseitigen Ende der Siebtrommel kommen kann. Während sich die gefüllten Zwischenräume allmählich in Richtung Grobstoffaustrag bewegen, fließt das viskose Fluid durch die Öffnungen im Mantel ab. Das erfindungsgemäße Verfahren ist demzufolge in hervorragender Weise geeignet, Belastungsspitzen durch eine schnelle Beschickung von großen Chargen zu verkraften.

Das erfindungsgemäße Verfahren ist in besonderer Weise geeignet, um ein viskoses Fluid mit einer dynamischen Viskosität oder scheinbaren dynamische Viskosität zwischen 0,01 und 1 Pa*s, vorzugsweise zwischen 0,02 und 0,2 Pa*s von Grobstoffen zu befreien. Eine Suspension oder Emulsion mit einer scheinbaren Viskosität in den genannten Bereichen verhält sich in einem Viskosimeter ebenso wie eine Flüssigkeit, deren Viskosität ebenso hoch ist. Der genannte Bereich der Viskositäten ist das 10- bis 100-fache derjenigen von reinem Wasser bei 20°C. Das erfindungsgemäße Verfahren ist zwar auch für Fluide geringerer Viskosität geeignet, aber die Vorteile des erfindungsgemäßen Verfahrens gegenüber den Verfahren nach dem Stand der Technik sind bei hoch-viskosen Fluiden besonders ausgeprägt. Für Fluide, deren Viskosität über dem genannten Bereich liegt, ist auch das erfindungsgemäße Verfahren wenig geeignet, da ein gutes Abfließen des Fluids unter der Wirkung der Schwerkraft durch die Öffnungen im Mantel dann nicht mehr gegeben ist.

Das erfindungsgemäße Verfahren ist in besonderer Weise geeignet für ein viskoses Fluid mit einem Feststoffgehalt zwischen 0,5 und 6%. Schlämme, deren Feststoffkonzentration in diesem Bereich liegt, haben eine dynamische Viskosität, für die das erfindungsgemäße Verfahren im Vergleich mit dem Stand der Technik besonders vorteilhaft ist.

Vorzugsweise wird die Siebtrommel unter Druck mit den groben Feststoffen und dem viskosen Fluid beschickt. Feststoffe und Fluid werden dadurch gezielt in die Siebtrommel eingebracht. Die Trennung erfolgt leichter und eine Verstopfung des Beschickungsrohres wird vermieden.

Das Verfahren wird bevorzugt unter Verwendung einer Vorrichtung realisiert, wobei die rotierende Siebtrommel in einem feststehenden Gehäuse angeordnet ist, das mit einer Wanne zum Auffangen des ablaufenden viskosen Fluids verbunden ist. Das Gehäuse dient zur Vermeidung der Emission von Geruch, Dampf und Aerosolen aus dem Fluid und Waschwasser. Das durch die Öffnungen des Mantels der Siebtrommel abfließende Fluid wird in der Wanne, die bevorzugt ein integraler Bestandteil des Gehäuses ist, aufgefangen. Mit der Reinigungsvorrichtung wird die Funktionsfähigkeit der Siebtrommel auch bei schwierigen Feststoffen und Fluiden sichergestellt.

Erfindungsgemäß ist innerhalb der Siebtrommel zumindest eine Spritzdüse zum Waschen der zurückgehaltenen groben Feststoffe angeordnet, um ein zusätzliches Waschen der zurückgehaltenen Grobstoffe mit geringem zusätzlichen Aufwand zu ermöglichen. Hierbei ist die Spritzdüse zum Waschen der groben Feststoffe in einem Bereich zwischen der halben Länge der Siebtrommel und dem austragseitigen Ende angeordnet. Das bedeutet, dass zumindest die erste Hälfte der Siebtrommel zum Absieben und weniger als die zweite Hälfte zum Waschen der Grobstoffe dient.

Vorteilhafterweise hat die Wanne einen Tiefpunkt, an dem eine Auslassöffnung, insbesondere ein Stutzen angeordnet ist, um das ablaufende Fluid abzuleiten. In weiterer vorteilhafter Ausgestaltung der erfindungsgemäßen Vorrichtung ist das Gehäuse mit einer zweiten Wanne zum Auffangen von Waschflüssigkeit mit einem Tiefpunkt verbunden, an dem eine zweite Auslassöffnung, insbesondere ein zweiter Stutzen für die ablaufende Waschflüssigkeit angeordnet ist, wobei die zweite Wanne von dem zulaufseitigen Ende aus betrachtet hinter der ersten Wanne zum Auffangen des ablaufenden viskosen Fluids angeordnet ist. Diese Ausgestaltung ist dann besonders vorteilhaft, wenn das Fluid nicht mit Waschflüssigkeit gemischt vermischt und verdünnt werden soll. Die zweite Wanne dient zum getrennten Auffangen der Waschflüssigkeit.

Das Gehäuse der erfindungsgemäßen Vorrichtung kann einen Anschluss für eine Leitung zum Absaugen von Gasen und Dämpfen aufweisen, um diese einer Behandlung zuzuführen, was insbesondere dann vorteilhaft ist, wenn frei werdende Gase oder Dämpfe gesundheitsgefährdend sind. So ist beispielsweise der aus Fäkalschlamm austretende Schwefelwasserstoff nicht nur sehr geruchsintensiv, sondern sogar in sehr geringer Konzentration toxisch. Die Behandlung kann beispielsweise durch saure oder alkalische Wäsche oder in einem Biofilter erfolgen. Wenn Luft aus dem Gehäuse abgesaugt wird, so entsteht in dem Gehäuse ein leichter Unterdruck, der verhindert, dass Gase und Dämpfe durch Undichtheiten des Gehäuses in die Umwelt austreten.

Ist die Siebtrommel mit einem Antrieb versehen, welcher sie mit einer Drehzahl zwischen 2 und 100 Umdrehungen pro Minute dreht, so wird eine sehr wirkungsvolle Siebung bewirkt. Das Wirkprinzip unterscheidet sich dabei von einer Zentrifuge, welche mit einer wesentlich höheren Geschwindigkeit das Material an den Mantel der Trommel presst.

Vorzugsweise ist die Vorrichtung aus korrosionsbeständigen Werkstoffen wie rostfreien Stählen hergestellt. Korrosion wird durch Feuchtigkeit, insbesondere aber auch durch freiwerdende Gase erzeugt. Beispielsweise wird durch die Kombination von Kondenswasser und Schwefelwasserstoff extrem korrosive Schwefelsäure gebildet. Dagegen ist beispielsweise rostfreier Stahl mit der Werkstoffnummer 1.4571 (SS 316) relativ gut beständig. Korrosionsbeständigkeit kann aber auch durch Beschichtung der Werkstoffe, z. B. mit geeignetem Kunststoff, erreicht werden.

In vorteilhafter Ausführung hat die Achse der Siebtrommel einen Winkel zur Horizontalen von 3 bis 30°, vorzugsweise von 5 bis 15°. Insbesondere steigt die Achse vom zulaufseitigen Ende zum austragsseitigen Ende. Die Grobstoffe werden durch das Wendelblech schräg nach oben zum austragseitigen Ende transportiert, wohingegen das viskose Fluid durch Unterbrechungen im wendelförmigen Blech zum zulaufseitigen Ende zurückfließen kann. Geringere Winkel bieten keinen Vorteil gegenüber einer horizontalen Achse, größere Winkel würden das Volumen für das Fluid zwischen dem Wendelblech zu stark verkleinern.

Vorteilhafterweise sind die Öffnungen im Mantel der rotierenden Siebtrommel Perforationen mit einem Durchmesser zwischen 3 und 15 mm, vorzugsweise zwischen 6 und 10 mm. Im Vergleich zu Spalten oder Schlitzen halten Löcher die Grobstoffe besser zurück. Längliche Grobstoffe werden in Sieben mit Löchern oder Maschen besser zurückgehalten als durch Siebe mit Spalten. Insbesondere für Klär- und Fäkalschlämme ist der genannte Bereich für den Lochdurchmesser günstig, weil die Fäkalien durchgehen, während grobe Störstoffe zurückgehalten werden. Kleinere Öffnungen wären zu verstopfungsanfällig, größere Öffnungen würden zu viele Störstoffe durchlassen.

Alternativ sind die Öffnungen im Mantel der rotierenden Siebtrommel Schlitze mit einer Spaltweite von 2 bis 12 mm, vorzugsweise von 4 bis 8 mm. Schlitze bzw. Spalte müssen eine geringere Weite haben als Löcher, um denselben Rückhalt zu leisten. Dafür ist die freie Fläche Spaltsieben in der Regel größer als diejenige von Lochsieben.

In weiterer Ausgestaltung der erfindungsgemäßen Vorrichtung weist zumindest ein Teil des Mantels der Siebtrommel parallel angeordnete keilförmige Stege auf, zwischen denen sich die Schlitze erstrecken, wobei die Stege an der Innenfläche das Mantels breiter sind als an der Außenfläche des Mantels. Es kann durchaus vorteilhaft sein, wenn nur ein Teil des Mantels mit Schlitzen versehen ist und ein anderer Teil mit anders geformten Öffnungen, z. B. mit Löchern. Die Form der die Spalte begrenzenden Stege bewirkt, dass die Spalte an der Innenfläche des Mantels enger sind als an dessen Außenfläche. Hierdurch wird verhindert, dass sich Feststoffe in den Schlitzen verkeilen und die Schlitze verstopfen.

Vorzugsweise sind die Schlitze ringförmig um die Achse der Siebtrommel angeordnet, d.h. in Richtung des Umfanges der Siebtrommel. Hierdurch wird die Reinigung der Siebtrommel z. B. durch Bürsten erleichtert.

In einer weiteren vorteilhaften Ausgestaltung der erfindungsgemäßen Vorrichtung ist innerhalb des Gehäuses und außerhalb der Siebtrommel zumindest eine Spritzdüse zum Reinigen der Öffnungen im Mantel der Siebtrommel angeordnet. Die Spritdüse befindet sich also in dem Hohlraum zwischen dem Gehäuse und der Siebtrommel. Die Spritzdüse ist über der Achse der Siebtrommel angeordnet. Die Spitzdüse spritzt Waschflüssigkeit auf den Mantel entgegen der Strömungsrichtung des Fluids, um Feststoffe von den Öffnungen zu entfernen und die Öffnungen frei zu machen.

Die zumindest eine Spritzdüse ist vorzugsweise in einer Position zwischen 8 und 12 Uhr angeordnet, wenn die Siebtrommel von der zulaufseitige Stirnseite der Siebtrommel betrachtet im Uhrzeigersinn rotiert. In Drehrichtung der Siebtrommel ist die Spritzdüse also vor dem Scheitel angeordnet. Der Mantel und seine Öffnungen werden gewaschen, sobald diese den Bereich, in dem das viskose Fluid gesiebt wird, nach oben verlassen haben. Die Strahlen der Spritzdüse sind vorzugsweise nach unten gerichtet, um das Ablaufen von Flüssigkeit und der darin enthaltenen Verunreinigungen zu erleichtern. In den meisten Fällen werden mehrere Spritzdüsen auf einer Spritzdüsenleiste angeordnet, die parallel zur Achse der Siebtrommel verläuft.

Um das Reinigen der Öffnungen im Mantel weiter zu verbessern, ist es vorteilhaft, zumindest eine weitere Spritzdüse in einer Position zwischen 12 und 4 Uhr, also nach dem Scheitelpunkt, anzuordnen, um das Reinigen der Öffnungen im Mantel noch weiter zu verbessern. Auch diese Düse spritzt vorzugsweise nach unten oder schräg nach unten. Auch diese Düse kann Teil einer parallel zur Achse der Siebtrommel angeordneten Spritzdüsenleiste sein.

Vorzugsweise wird den Spritzdüsen Waschflüssigkeit mit einem Druck zwischen 2 und 10 bar zugeführt wird, so dass die Geschwindigkeit das Strahles 20 bis 45 m/s beträgt. Wenn es sich bei dem viskosen Fluid um eine wässrige Suspension oder Emulsion handelt, wird vorzugsweise Wasser, z. B. Klarwasser, als Waschflüssigkeit verwendet.

Zusätzlich oder alternativ kann innerhalb des Gehäuses und außerhalb der Siebtrommel zumindest eine Hochdruckspritzdüse zum Reinigen der Öffnungen im Mantel der Siebtrommel angeordnet sein. Hochdruckspritzdüsen können insbesondere dann erforderlich sein, wenn die Öffnungen im Mantel der Siebtrommel klein sind oder wenn das viskose Fluid oder die groben Feststoffe sehr klebrig sind. Die Verwendung von Hochdruckspritzdüsen hat den Vorteil, dass ihre Reinigungswirkung trotz sehr geringen Verbrauchs von Waschflüssigkeit sehr gut ist. Die Hochdruckspritzdüse kann anstelle oder zusätzlich zu den zuvor erwähnten Spritzdüsen angeordnet werden, vorzugsweise ebenfalls in einer Position, bei der sie nach unten oder schräg nach unten spritzt.

Insbesondere werden mehrere Hochdruckspritzdüsen auf einer geraden und zur Achse der Siebtrommel parallelen Linie mit einem Abstand zwischen den Hochdruckspritzdüsen von 5 bis 50 cm, vorzugsweise von 10 bis 30 cm angeordnet. Hierdurch wird erreicht, dass die gesamte Mantelfläche den Wirkungsbereich der Hochdruckspritzdüsen durchläuft.

In einer besonders vorteilhaften Ausführungsform ist die zumindest eine Hochdruckspritzdüse in axialer Richtung, also parallel zur Achse der Siebtrommel, bewegbar. Hierdurch wird der Wirkungsbereich der Spritzdüse vergrößert. Es genügt, wenn der Hochdruck-Waschflüssigkeitsstrahl jede Stelle des Siebtrommelmantels ab und zu erreicht. Bei aufeinander abgestimmter Kombination der axialen Bewegung der Hochdruckspritzdüse und der rotierenden Bewegung des Mantels, wird die gesamte Manteloberfläche periodisch mit Hochdruckstrahlen beaufschlagt.

In weiterer Ausgestaltung der erfindungsgemäßen Vorrichtung ist die zumindest eine Hochdruckspritzdüse mittels eines Spindelgetriebes bewegbar. Das Spindelgetriebe besteht aus einer rotierend angetriebenen Gewindestange oder Spindel, die sich durch eine mit einem entsprechenden Gewinde versehenen Halterung der Düse erstreckt. Bei Drehung der Gewindestange bewegt sich die Halterung und mit ihr die Düse in axialer Richtung der Gewindestange. Durch Umkehrung der Drehrichtung der Gewindestange wird die axiale Bewegungsrichtung des Trägers und der Düse umgekehrt. Die Spindel ist koaxial zur Achse der Siebtrommel angeordnet.

Vorzugsweise wird der zumindest einen Hochdruckspritzdüse Waschflüssigkeit mit einem Druck zwischen 50 und 300 bar zugeführt, so dass die Geschwindigkeit das Waschflüssigkeitsstrahles 100 bis 250 m/s beträgt.

Alternativ oder zusätzlich zu den Spritzdüsen kann außerhalb der Siebtrommel zumindest eine Bürste zum Reinigen der Öffnungen im Mantel der Siebtrommel angeordnet sein. Die Borsten der Bürste greifen dabei in die Öffnungen im Siebtrommelmantel ein, um Feststoffe aus den Öffnungen zu drücken. Die Bürste wird vorzugsweise in Drehrichtung hinter einer Spritzdüse angeordnet, so dass sie nicht durch viskoses Fluid verunreinigt wird. Ihre Aufgabe ist es, noch in Öffnungen des Mantels festsitzende Feststoffe aus den Öffnungen zu drücken.

Nach einer besonders vorteilhaften Ausführungsform der Erfindung ist die Bürste walzenförmig und rotiert um ihre Achse. Die Borsten einer rotierenden walzenförmigen Bürste greifen tiefer und länger in die Öffnungen im Mantel der rotierenden Siebtrommel ein, so dass sie eine bessere Reinigungswirkung als die Borsten einer feststehenden Bürste haben. Außerdem verschleißen die Borsten weniger, wenn die Bürste rotiert.

Der Reinigungseffekt ist besonders gut und der Verschleiß der Borsten besonders gering, wenn die Bürste mit ungefähr der gleichen Umfangsgeschwindigkeit rotiert wie der Mantel der Siebtrommel.

Vorzugsweise ist die Bürste durch die Siebtrommel antreibbar. Damit ist sichergestellt, dass die Bürste beinahe dieselbe Umfangsgeschwindigkeit hat wie die Siebtrommel. Außerdem erübrigt sich ein Motor zum Antrieb der Bürste, was die Herstell- und Betriebskosten vermindert. Der Antrieb der Bürste über die Siebtrommel erfolgt form- oder kraftschlüssig über die Bürsten.

In weiterer vorteilhafter Ausgestaltung der Erfindung ist die Vorrichtung mit einer Rohrleitung zum Zuführen des viskosen Fluids verbunden, ist die Rohrleitung durch das zulaufseitige Ende in die Siebtrommel eingeführt und weist ein Ende innerhalb der Siebtrommel auf, wobei das Ende der Rohrleitung einen Winkel zwischen 30° und 90° zur Achse der Siebtrommel aufweist, so dass das zugeführte Fluid mit einer radialen Geschwindigkeitskomponente aus dem Ende der Rohrleitung ausströmt. Das zugeführte Fluid trifft mit einer radialen Geschwindigkeitskomponente auf den Mantel auf, so dass das Fluid mit kinetischer Energie durch die Öffnungen im Mantel strömt. Diese kinetische Energie erzeugt außerdem Turbulenz, die Feststoffe von den Öffnungen entfernt. Vorzugsweise wird die Siebtrommel unter Druck mit den groben Feststoffen und dem viskosen Fluid beschickt. Feststoffe und Fluid werden dadurch gezielt in die Siebtrommel eingebracht. Die Trennung erfolgt leichter und eine Verstopfung der Rohrleitung wird vermieden. Die Beschickung unter Druck kann auch mit einer Rohrleitung ohne gekrümmtem Ende erfolgen, wenn auch die Krümmung bessere Erfolge erzielt.

Vorzugsweise ist die Rohrleitung ungefähr parallel zur Achse der Siebtrommel oder horizontal in die Siebtrommel eingeführt ist und ist das Ende der Rohrleitung ein Rohrbogen. Es hat fertigungstechnische Vorteile, wenn die Rohrleitung axial oder koaxial zur Achse der Siebtrommel senkrecht durch eine Fläche des Gehäuses zugeführt wird. Andererseits ist der Anschluss der Rohrleitung leichter, wenn diese horizontal verläuft. Um eine radiale Geschwindigkeitskomponente zu erzeugen, wird am Ende der Rohrleitung ein Rohrbogen angebracht.

Vorteilhafterweise weist die radiale Geschwindigkeitskomponente in eine Richtung zwischen 6 und 9 Uhr, wenn die Siebtrommel vom einlaufseitigen Ende aus gesehen im Uhrzeigersinn rotiert. Das bedeutet, dass das zugeführte Fluid an einer Stelle auf den Mantel der Siebtrommel auftrifft, wo sich der Mantel nach oben bewegt und Öffnungen durch Feststoffe zugesetzt sind. Das auftreffende Fluid spült Öffnungen frei.

Um eine zu hohe Geschwindigkeit des eingeführtes Fluids zu vermeiden, weist das Ende der Rohrleitung einen Durchmesser auf, der 1,25 bis 3 mal so groß ist wie der Durchmesser der zuführenden Rohrleitung. Hierdurch wird die Geschwindigkeit des Fluids am Ende auf ca. 11 bis 64% der Geschwindigkeit in der Rohrleitung verringert. Das ist insbesondere vorteilhaft bei einer Zuführung von großen Chargen in geringer Zeit, also bei sehr hoher Geschwindigkeit in der Rohrleitung. Dadurch, dass die Geschwindigkeit des Fluids beim Austritt aus dem Ende der Rohrleitung vermindert wird, werden Beschädigungen der Siebtrommel und des Wendelbleches durch einen zu scharfen Strahl vermieden.

In weiterer Ausgestaltung der Erfindung, weist das Ende der Rohrleitung eine Querschnittsfläche auf, die so vergrößert ist, dass das viskose Fluid mit einer Geschwindigkeit zwischen 0,5 und 3 m/s, vorzugsweise zwischen 0,75 und 2 m/s in die Siebtrommel einströmt. Das ist eine Geschwindigkeit, die ausreicht, um Ablagerungen von Sinkstoffen zu verhindern, die aber nicht so groß ist, dass die Siebtrommel beschädigt wird.

In weiterer vorteilhafter Ausgestaltung der Erfindung weist das wendelförmige Blech in der Siebtrommel im Bereich der Öffnungen im Mantel der Siebtrommel keine Unterbrechung auf. Das bedeutet, dass das Blech im Bereich der Öffnungen aus einem Stück besteht, so dass das Blech geschlossene Wehre bildet, die das Durchströmen von Fluid zum austragseitigen Ende der Siebtrommel verhindern.

Vorzugsweise weist das wendelförmige Blech in der Siebtrommel 5 bis 15 Wendeln auf, so dass das Durchströmen des Fluids mehrfach durch die als Wehr wirkenden Wendeln des Bleches verhindert wird. Je länger die Siebtrommel ist, um so mehr Wendeln werden vorgesehen.

Das wendelförmige Blech weist in weiterer Ausgestaltung der Erfindung eine Höhe zwischen 5 und 25% des Durchmessers der Siebtrommel auf. Je größer dieses Verhältnis ist, um so größer ist das Volumen für das Fluid in den Zwischenräumen zwischen den Wendeln, um so größer ist der maximale Durchsatz des viskosen Fluids. Andererseits würde eine noch größere Höhe des Wendelbleches die Anordnung und den Einbau von Spritzdüsen in der Siebtrommel behindern.

Gemäß einer weiteren bevorzugten Ausgestaltung der Erfindung weist der Mantel innerhalb eines Abstandes von 5 mm hinter dem wendelförmigen Blech, vom zulaufseitigen Ende der Siebtrommel aus gesehen, keine Öffnungen auf. Dadurch wird verhindert, dass das Blech die freie Querschnittsfläche von Öffnungen in unmittelbarer Nähe des Blechs verkleinert und dass sich dort Feststoffe wie Fasern ansetzen. Wo der das wendelförmige Blech verläuft, werden keine Öffnungen in den Mantel der Siebtrommel gestanzt, gebohrt oder geschnitten.

Vorzugsweise rotiert die Siebtrommel mit einer Drehzahl zwischen 2 und 100, vorzugsweise zwischen 2 und 20 Umdrehungen pro Minute, insbesondere zwischen 3 und 10 Umdrehungen pro Minute. Eine geringe Drehzahl erhöht zwar den maximalen Fluiddurchsatz, vermindert aber den Durchsatz von groben Feststoffen und die Frequenz mit der die Öffnungen gewaschen werden.

In weiterer Ausgestaltung der Erfindung ist die Drehzahl der Siebtrommel variabel einstellbar, um das Verhältnis zwischen den maximalen Durchsätzen für Fluid und Grobstoffe optimieren zu können.

Vorzugsweise ist die Siebtrommel an ihrem Umfang auf mit dem Gehäuse verbundenen Rollen radial gelagert. In der Regel werden zwei Rollen in der Nähe des zulaufseitigen Endes und zwei weitere Rollen in der Nähe das austragseitigen Endes angeordnet. Hierdurch benötigt die Siebtrommel keine Welle und deren Lagerung. Die Lagerung erfolgt vorzugsweise über die Außenfläche der Siebtrommel.

Gemäß einer weiteren bevorzugten Ausführungsform weist die Siebtrommel eine zulaufseitige Stirnfläche auf, die mittels zumindest einer Rolle axial gelagert ist. Wenn die Siebtrommel am austragseitigen Ende höher ist, wird diese Rolle an der zulaufseitigen Stirnfläche angebracht. Alle Rollen sind außerhalb des Fluidbereiches angeordnet, so dass die Funktion der Rollen nicht durch Verschmutzung beeinträchtigt wird.

Die Siebtrommel ist von einem Motor über ein Ritzel und einen Zahnkranz antreibbar. Noch vorteilhafter ist es, wenn die Siebtrommel von einem Motor über ein Ritzel und eine Kette antreibbar, wobei die Kette am Umfang der Siebtrommel befestigt ist und das Ritzel in Glieder der Kette eingreift. Dadurch entfallen die Kosten für einen Zahnkranz und eine Kettenspannvorrichtung.

In weiterer Ausgestaltung der Erfindung hat die Wanne zum Auffangen des viskosen Fluids einen Boden, der eine Neigung von mindestens 25° zur Horizontalen aufweist, um eine Ablagerung von Feststoffen in der Wanne zu vermeiden. Zur Vermeidung der Ablagerung von Sand und anderen mineralischen Sinkstoffen ist eine Neigung von mindestens 45° erforderlich.

In weiterer Ausgestaltung der erfindungsgemäßen Vorrichtung weist der Mantel der Siebtrommel eine Oberfläche zwischen 0,2 und 0,4 m² pro l/s Zufluss des viskosen Fluids auf. Das bedeutet, dass pro m² Mantelfläche der Siebtrommel 5 bis 10 l/s des viskosen Fluids zugeführt werden können.

Weitere erfindungsgemäße Merkmale und Vorteile sind nicht nur den Ansprüchen zu entnehmen, sondern auch in den nachfolgenden Ausführungsbeispielen und den diese illustrierenden Figuren erkennbar. In den Figuren sind gleiche oder gleichwirkende Elemente mit identischen Bezugsnummern bezeichnet. Es zeigen
- **Figur 1**: einen schematisch dargestellten Längsschnitt durch eine erfindungsgemäße Vorrichtung zum Abtrennen von groben Feststoffen aus einer viskosen Flüssigkeit entlang der Achse einer rotierenden Siebtrommel,
- **Figur 2**: einen schematisch dargestellten Querschnitt durch die erfindungsgemäße Vorrichtung der Figur 1 senkrecht durch die Achse der rotierenden Siebtrommel und deren Lagerung,
- **Figur 3**: einen weiteren schematisch dargestellten Querschnitt durch die erfindungsgemäße der Figur 1 senkrecht durch die Achse der rotierende Siebtrommel und deren Antrieb,
- **Figur 4**: eine Detailansicht von zwei erfindungsgemäßen, mittels eines Spindeltriebes bewegbaren Hochdruckspritzdüsen.

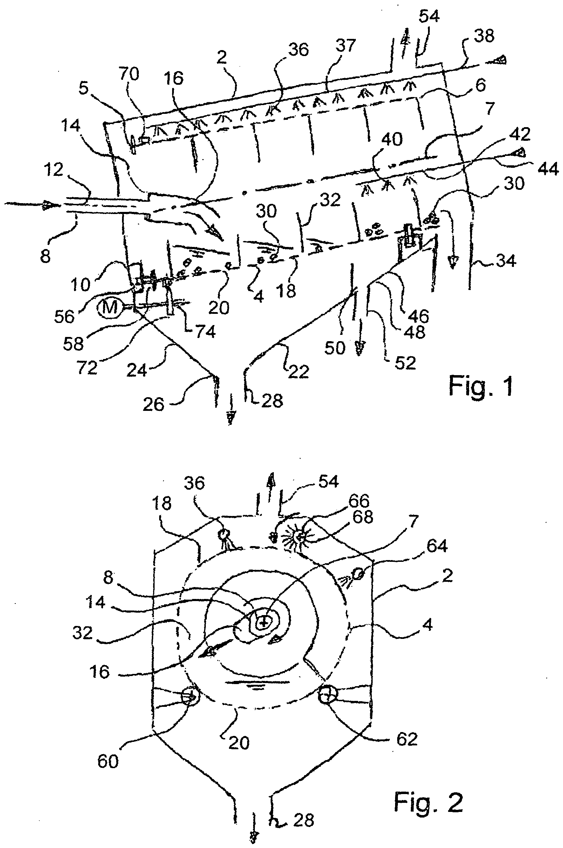

In Figur 1 ist eine erfindungsgemäße Vorrichtung zum Abtrennen von groben Feststoffen aus einer viskosen Flüssigkeit dargestellt. Die Vorrichtung weist ein Gehäuse 2 auf, in dem eine Siebtrommel 4 angeordnet ist. Die Siebtrommel 4 hat ein zulaufseitiges Ende 5 und ein austragsseitiges Ende 6 und ist um eine Achse 7 rotierbar. Im Ausführungsbeispiel ist die Achse 7 zur Horizontalen so geneigt, dass das austragsseitige Ende 6 höher ist als das zulaufseitige Ende 5.

Viskoses Fluid wird der Vorrichtung durch eine Rohrleitung 8 zugeführt. Die Rohrleitung 8 tritt durch eine Stirnwand 10 des Gehäuses 2. Im Beispiel ist eine Achse 12 der Rohrleitung 8 mit einem Winkel zur Achse 7 der Siebtrommel 4 dargestellt, die Achsen 12 und 7 können jedoch auch parallel verlaufen. Die Rohrleitung 8 hat eine Erweiterung 14, um die Geschwindigkeit des zufließenden viskosen Fluids zu vermindern. Am Ende der Rohrleitung 8 ist ein Rohrbogen 16 angebracht, um die Richtung des zufließenden viskosen Fluids so zu verändern, dass sie mit einer Radialkomponente relativ zur Achse 7 der Siebtrommel 4 aus der Rohrleitung 8 ausfließt. Der dargestellt Rohrbogen 16 hat einen Winkel von 45°.

Die Siebtrommel 4 hat einen Mantel 18, der mit Öffnungen 20 versehen ist. Unter Einwirkung von Schwerkraft fließt das Fluid durch die Öffnungen 20 hindurch und wird in einer mit dem Gehäuse 2 verbundenen Wanne 22 aufgefangen. Die Wanne 22 hat einen Boden 24, der eine Neigung von mindestens 25° aufweist, so dass das Fluid zu einem Tiefpunkt 26 abläuft und sich im Fluid enthaltene Feststoffe nicht auf dem Boden 24 ablagern. Am Tiefpunkt 26 ist ein Stutzen 28 angeordnet durch den das Fluid abgeleitet wird.

Die Öffnungen 20 können rund, rechteckig oder schlitzförmig sein. Grobe Feststoffe 30, die größer als die Öffnungen 20 sind, werden an den Öffnungen 20 zurückgehalten und verbleiben in der Siebtrommel 4. Am inneren Mantel 18 der Siebtrommel 4 ist ein Wendelblech 32 befestigt. Das Wendelblech 32 ist schneckenförmig ausgebildet. Das Wendelblech 32 kann Unterbrechungen haben, um ein Rückfließen des Fluids in der Siebtrommel 4 in Richtung zu dem zulaufseitigen Ende 5 zu ermöglichen. Das Wendelblech 32 kann aber auch unterbrechungsfrei sein. Durch Rotation des mit der Siebtrommel 4 verbundenen Wendelblechs 32 werden die zurückgehaltenen Grobstoffe 30 zum abwurfseitigen Ende 6 transportiert und fallen dort durch einen mit dem Gehäuse verbundenen Schacht 34. Die ausgetragenen Grobstoffe können in einem nicht dargestellten Container gesammelt werden oder mit einer nicht dargestellten Fördereinrichtung weitergefördert werden. Sie können einer weiteren Behandlung durch Waschen oder Pressen zugeführt werden.

In dem Gehäuse 2, außerhalb der Siebtrommel 4 und oberhalb der Achse 7 sind Spritzdüsen 36 auf einer parallel zur Achse 7 angeordneten Spritzdüsenleiste 37 angebracht. Den Spritzdüsen 36 wird Waschflüssigkeit, beispielsweise Waschwasser, über eine Leitung 38 zugeführt. Während der Mantel 18 an den Spritzdüsen vorbei rotiert, spritzen die Spritzdüsen 36 die Waschflüssigkeit von außen auf den Mantel 18, so dass an den Öffnungen 20 haftende Feststoffe in die Siebtrommel 4 zurückgespült werden und die Öffnungen 20 wieder frei sind, wenn sie wieder nach unten rotieren, wo sie erneut mit Fluid beaufschlagt werden.

In dem Gehäuse 2, innerhalb der Siebtrommel 4 und unterhalb der Achse 7 sind weitere Spritzdüsen 40 auf einer weiteren parallel zur Achse 7 angeordneten Spritzdüsenleiste 42 angebracht. Den Spritzdüsen 40 wird Waschflüssigkeit über eine weitere Leitung 44 zugeführt. Die Spritzdüsen 40 spritzen Waschflüssigkeit auf in der Siebtrommel 4 zurückgehaltene Grobstoffe, um von diesen anhaftendes viskoses Fluid oder Verunreinigungen wie Fäkalien abzuwaschen, während die Grobstoffe zum austragsseitigen Ende 6 der Siebtrommel 4 transportiert werden. Unterhalb der Spritzdüsen 40 ist eine weitere mit dem Gehäuse 2 verbundene Wanne 46 zum Auffangen von Waschflüssigkeit angeordnet. Die Wanne 46 hat einen Boden 48, der mit mindestens 25° zu einem Tiefpunkt 50 hin geneigt ist, um Ablagerungen von Feststoffen zu vermeiden. Am Tiefpunkt 50 ist ein Stutzen 52 zum Ableiten der Waschflüssigkeit angeordnet. Die Waschflüssigkeit, die den Spritzdüsen 40 zugeführt und über den Stutzen 52 abgeleitet wird, kann eine andere sein als diejenige, die den Spritzdüsen 36 zugeführt wird. Durch Anordnung der zweiten Wanne 46 wird verhindert, dass das in der ersten Wanne 22 gesammelte viskose Fluid mit der Waschflüssigkeit verdünnt wird, die den Spritzdüsen 40 zugeführt wird.

Oben am Gehäuse 2 ist ein weiterer Stutzen 54 zum Absaugen von Gasen und Dämpfen angeordnet, die einer Behandlung zugeführt werden können. Durch das Absaugen von Luft wird im Gehäuse 2 ein leichter Unterdruck erzeugt, der verhindert, dass Geruch und Dampf durch Undichtheiten des Gehäuses 2 austritt.

Eine mit dem Gehäuse 2 verbundene Rolle 56 läuft auf einer Stirnfläche 58 der Siebtrommel 4, so dass die Siebtrommel 4 von der Rolle 56 axial gelagert ist und nicht in Richtung zum zulaufseitigen Ende 5 bewegbar ist.

Figur 2 zeigt einen Querschnitt durch die erfindungsgemäße Vorrichtung senkrecht zur Achse 7 der Siebtrommel 4. Die Vorrichtung wird vom zulaufseitigen Ende 5 der Siebtrommel 4 aus betrachtet. Die Siebtrommel 4 rotiert im Uhrzeigersinn um die Achse 7. Die Siebtrommel 4 ist auf Rollen 60 und 62 gelagert, die mit dem Gehäuse 2 verbunden sind. Das Wendelblech 32 hat eine Höhe von 5% bis 25% des Durchmessers des Mantels 18 der Siebtrommel 4.

Das viskose Fluid wird durch die Rohrleitung 8, die Erweiterung 14 der Rohrleitung 8 und einen am Ende der Rohrleitung 8 angebrachten Rohrbogen 16 zugeführt. Der Rohrbogen ist so ausgerichtet, dass das Fluid mit einer in Richtung 8 Uhr weisenden radialen Geschwindigkeitskomponente in die Siebtrommel 4 einströmt. Dort bewegt sich der Mantel 18 nach oben und seine Öffnungen 20 sind teilweise mit Feststoffen verstopft. Das Fluid trifft dort auf den Mantel 18 der Siebtrommel 4 und spült die verstopfenden Feststoffe von den Öffnungen 20 weg.

Die Spritzdüsen 36 sind bei diesem Beispiel in einer Position von ungefähr 11 Uhr angeordnet, so dass die Waschflüssigkeit innen am Mantel 18 abfließt. Weitere Spritzdüsen 64 sind in einer Position von ungefähr 2 Uhr angeordnet, um die Reinigung der Öffnungen 20 noch weiter zu verbessern. In dem Gehäuse 2 und außerhalb der Siebtrommel 4 ist eine Bürstenwalze 66 koaxial zur Achse 7 der Siebtrommel 4 angeordnet. Bürsten 68 der Bürstenwalze 66 greifen in die Öffnungen 20 ein und drücken Feststoffe aus den Öffnungen in die Siebtrommel zurück. Die Bürstenwalze 66 rotiert entgegen dem Uhrzeigersinn. Die Bürstenwalze 66 wird durch die Bewegung des Mantels 18 angetrieben, indem in die Öffnungen eingreifende Bürsten 68 mitgenommen werden.

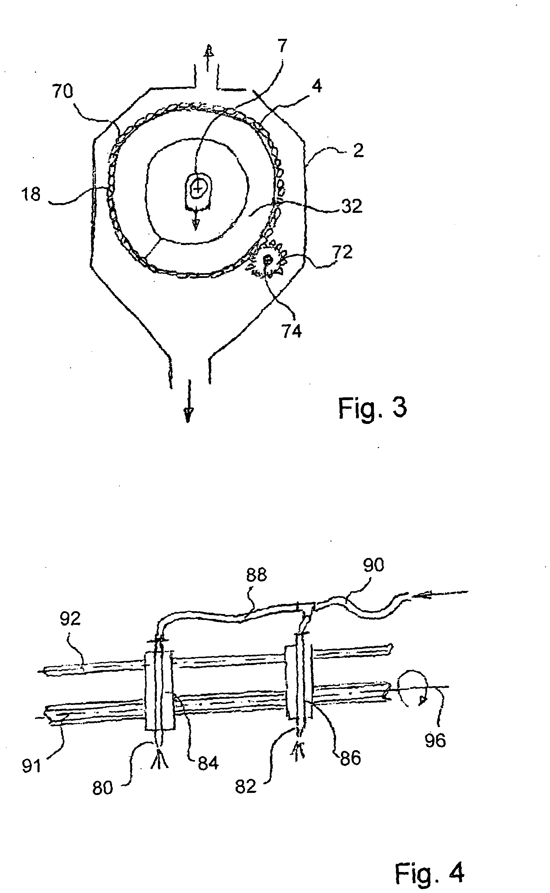

Figur 3 zeigt einen weiteren Querschnitt durch die erfindungsgemäße Vorrichtung im Bereich des Antriebes der Siebtrommel 4. Eine Kette 70 ist umfänglich auf dem Mantel 18 der Siebtrommel 4 befestigt. Die Zähne eines Ritzels 72 greifen in Glieder der Kette 70 ein. Das Ritzel wird durch einen Motor über eine Welle 74 angetrieben. Die Welle 74 ist parallel zur Achse 7 der Siebtrommel 4 angeordnet. Ein teurer Zahnkranz und eine Kettenspannvorrichtung sind nicht erforderlich.

Figur 4 zeigt zwei bewegbare Hochdruckspritzdüsen 80 und 82 für den Einsatz in der erfindungsgemäßen Vorrichtung. Hochdruckspritzdüsen werden anstelle normaler Spritzdüsen an derselben Position angeordnet, um die Reinigung der Öffnungen 20 des Siebkorbes 4 noch weiter zu verbessern und um den Verbrauch von Waschflüssigkeit zu vermindern. Die Hochdruckspritzdüsen 80 und 82 sind an Halterungen 84 und 86 befestigt. Waschflüssigkeit wird über Schläuche 88 und 90 zugeführt. Die beweglichen Halterungen 84 und 86 werden durch eine ortsfeste Stange 92 geführt. Die Stange 92 erstreckt sich durch Bohrungen in den Halterungen 84 und 86. Die ortsfeste Stange verhindert, dass die Halterungen 84 und 86 rotieren. Die Halter 84 und 86 weisen weitere Bohrungen mit Innengewinde auf, durch die sich eine Spindel 94 mit passendem Außengewinde erstreckt. Die Spindel 94 ist parallel zur Achse der Siebtrommel angeordnet und mit einem Antrieb verbunden, der sie in Rotation um ihre Achse 96 versetzt. Wenn die Spindel 94 rotiert, bewegen sich die Halterungen 84 und 86 mit identischer Geschwindigkeit in axialer Richtung. Bei einer geeigneten Kombination und Koordination der Geschwindigkeiten der axialen Bewegung der Halterungen 84 und 86 und der Rotation der Siebtrommel 4 reinigen die Hochdruckdüsen den gesamten Mantel 18 der Siebtrommel 4.

Die Erfindung ist nicht auf die dargestellten Ausführungsbeispiele beschränkt. Abwandlungen im Rahmen der Patentansprüche sind jederzeit möglich.

## Patentansprüche

1. Verfahren zum Abscheiden von groben Feststoffen (30) aus einem viskosen Fluid, insbesondere aus einem Schlamm, wobei das viskose Fluid und die in diesem enthaltenen groben Feststoffe (30) einer um eine horizontale oder geneigte Achse (7) rotierenden Siebtrommel (4) über eine erste Stirnseite der Siebtrommel (4) zugeführt werden, wobei das viskose Fluid durch in einem rotierenden Mantel (18) der Siebtrommel (4) angeordnete Öffnungen (20) der Siebtrommel (4) abläuft und mit einer Wanne (22) aufgefangen wird, die mit einem feststehenden Gehäuse (2) verbunden ist, in dem die rotierende Siebtrommel (4) angeordnet ist, wobei die groben Feststoffe (30) in der Siebtrommel (4) zurückgehalten und durch ein in der Siebtrommel (4) mit dem rotierenden Mantel (18) verbundenes wendelförmiges Blech (32) zu einer Austragsstelle an einer zweiten Stirnseite der Siebtrommel (4) gefördert werden, und wobei die Siebtrommel (4) durch eine Reinigungseinrichtung gereinigt wird, **dadurch gekennzeichnet, dass** die in der Siebtrommel (4) zurückgehaltenen groben Feststoffe (30) innerhalb der Siebtrommel (4) im Bereich zwischen der halben Länge der Siebtrommel (4) und der Austragsstelle während ihrer Abförderung mit Hilfe zumindest einer innerhalb der Siebtrommel (4) angeordneten Spritzdüse (40) gewaschen werden.

2. Verfahren nach dem vorherigen Anspruch, **dadurch gekennzeichnet, dass** die über die Spritzdüse (40) eingebrachte Waschflüssigkeit durch die Öffnungen (20) im Mantel (18) der Siebtrommel (4) abläuft.

3. Verfahren nach einem oder mehreren der vorherigen Ansprüche, **dadurch gekennzeichnet, dass** das viskose Fluid eine dynamische Viskosität oder scheinbare dynamische Viskosität zwischen 0,01 und 1 Pa*s, vorzugsweise zwischen 0,02 und 0,2 Pa*s aufweist und/oder das viskose Fluid einen Feststoffgehalt zwischen 0,5 und 6 % aufweist.

4. Vorrichtung zum Abscheiden von groben Feststoffen (30) aus einem viskosen Fluid, insbesondere aus einem Schlamm, wobei die Vorrichtung eine um eine horizontale oder geneigte Achse (7) rotierende Siebtrommel (4) aufweist, wobei in einem Mantel (18) der Siebtrommel (4) Öffnungen (20) angeordnet sind, wobei ein in der Siebtrommel (4) mit dem rotierenden Mantel (18) verbundenes wendelförmiges Blech (32) vorhanden ist, wobei die rotierende Siebtrommel (4) in einem feststehenden Gehäuse (2) angeordnet ist, das mit einer Wanne (22) zum Auffangen des ablaufenden viskosen Fluids verbunden ist, wobei eine Zuführeinrichtung für das viskose Fluid und die in diesem enthaltenen groben Feststoffe (30) an einer ersten Stirnseite der Siebtrommel (4) und eine Austrageinrichtung für die groben Feststoffe (30) an einer zweiten Stirnseite der Siebtrommel (4) angeordnet ist, und wobei der Siebtrommel (4) eine Reinigungseinrichtung zugeordnet ist, **dadurch gekennzeichnet, dass** innerhalb der Siebtrommel (4) in einem Bereich zwischen der halben Länge der Siebtrommel (4) und deren zweiter Stirnseite zumindest eine Spritzdüse (40) zum Waschen der zurückgehaltenen groben Feststoffe (30) angeordnet ist.

5. Vorrichtung nach dem vorherigen Anspruch, **dadurch gekennzeichnet, dass** die Wanne (22) einen Tiefpunkt (26) aufweist, an dem eine Auslassöffnung, insbesondere ein Stutzen (28) für das ablaufende Fluid, angeordnet ist und/oder das Gehäuse (2) mit einer zweiten Wanne (46) zum Auffangen von Waschflüssigkeit mit einem Tiefpunkt (50) verbunden ist, an dem eine zweite Auslassöffnung, insbesondere ein zweiter Stutzen (52) für die ablaufende Waschflüssigkeit angeordnet ist, wobei die zweite Wanne (46) von einem zulaufseitigen Ende (5) aus betrachtet hinter der ersten Wanne (22) zum Auffangen des ablaufenden viskosen Fluids angeordnet ist.

6. Vorrichtung nach einem oder mehreren der Ansprüche 4 und 5, **dadurch gekennzeichnet, dass** das Gehäuse (2) einen Anschluss (54) zum Absaugen von Gasen und Dämpfen aufweist.

7. Vorrichtung nach einem oder mehreren der Ansprüche 4 bis 6, **dadurch gekennzeichnet, dass** die Öffnungen (20) im Mantel (18) der rotierenden Siebtrommel (4) Perforationen mit einem Durchmesser zwischen 3 und 15 mm, vorzugsweise zwischen 6 und 10 mm sind.

8. Vorrichtung nach einem oder mehreren der Ansprüche 4 bis 7, **dadurch gekennzeichnet, dass** die Öffnungen (20) im Mantel (18) der rotierenden Siebtrommel (4) insbesondere ringförmig um die Achse (7) der Siebtrommel (4) angeordnete Schlitze mit einer Spaltweite von 2 bis 12, vorzugsweise von 4 bis 8 mm sind.

9. Vorrichtung nach einem oder mehreren der Ansprüche 4 bis 8, **dadurch gekennzeichnet, dass** innerhalb des Gehäuses (2) und außerhalb der Siebtrommel (4) zumindest eine Spritzdüse (36) zum Reinigen der Öffnungen (20) im Mantel (18) der Siebtrommel (4), insbesondere in einer Position zwischen 8 und 12 Uhr, wenn die Siebtrommel (4) von der zulaufseitige Stirnseite der Siebtrommel (4) betrachtet im Uhrzeigersinn rotiert, angeordnet ist.

10. Vorrichtung nach dem vorherigen Anspruch, **dadurch gekennzeichnet, dass** zumindest eine weitere Spritzdüse (64) in einer Position zwischen 12 und 4 Uhr angeordnet ist.

11. Vorrichtung nach einem oder mehreren der Ansprüche 9 und 10, **dadurch gekennzeichnet, dass** der zumindest einen Spritzdüse (36) Waschflüssigkeit mit einem Druck zwischen 2 und 10 bar zugeführt wird.

12. Vorrichtung nach einem oder mehreren der Ansprüche 4 bis 11, **dadurch gekennzeichnet, dass** außerhalb der Siebtrommel (4) zumindest eine Bürste (68) zum Reinigen der Öffnungen (20) im Mantel (18) der Siebtrommel (4) angeordnet ist.

13. Vorrichtung nach einem oder mehreren der Ansprüche 4 bis 12, **dadurch gekennzeichnet, dass** zur Verminderung der Geschwindigkeit des zugeführten Fluids das Ende der Rohrleitung (8) einen Durchmesser aufweist, der 1,25 bis 3 mal so groß ist wie der Durchmesser der zuführenden Rohrleitung (8).

14. Vorrichtung nach einem oder mehreren der Ansprüche 4 bis 13, **dadurch gekennzeichnet, dass** die Drehzahl der Siebtrommel (4) variabel einstellbar ist.

15. Vorrichtung nach einem oder mehreren der Ansprüche 4 bis 14, **dadurch gekennzeichnet, dass** der Mantel (18) der Siebtrommel (4) eine Oberfläche zwischen 0,2 und 0,4 m² pro l/s Zufluss des viskosen Fluids aufweist.

## Claims

1. A method for precipitating coarse solids (30) out of a viscous fluid, particularly out of a sludge, the viscous fluid and the coarse solids (30) present therein being fed into a screen drum (4) rotating about a horizontal or tilted axis (7) through a first end face of the screen drum (4), the viscous fluid running off through openings (20) of the screen drum (4) disposed in a rotating shell (18) of the screen drum (4) and being collected by means of a pan (22) connected to a stationary housing (2) in which the rotating screen drum (4) is disposed, the coarse solids (30) being retained in the screen drum (4) and transported by means of a helical sheet metal (32) connected to the rotating shell (18) in the screen drum (4) to a discharge point at a second end face of the screen drum (4), and the screen drum (4) being cleaned by a cleaning device, **characterized in that** the coarse solids (30) retained in the screen drum (4) are washed during the discharge thereof in the region between half the length of the screen drum (4) and the discharge point by means of at least one spray nozzle (40) disposed within the screen drum (4).

2. The method according to the preceding claim, **characterized in that** the washing fluid introduced by means of the spray nozzle (40) runs off through the openings (20) in the shell (18) of the screen drum (4).

3. The method according to one or more of the preceding claims, **characterized in that** the viscous fluid comprises a dynamic viscosity or apparent dynamic viscosity between 0.01 and 1 Pa*s, preferably between 0.02 and 0.2 Pa*s, and/or the viscous fluid comprises a solids content between 0.5% and 6%.

4. A device for precipitating coarse solids (30) out of a viscous fluid, particularly out of a sludge, the device comprising a screen drum (4) rotating about a horizontal or tilted axis (7), openings (20) of the screen drum (4) being disposed in a shell (18) of the screen drum (4), a helical sheet metal (32) being connected to the rotating shell (18) in the screen drum (4), the rotating screen drum (4) being disposed in a stationary housing (2) connected to a pan (22) for collecting the viscous fluid running off, a feed device for the viscous fluid and the coarse solids (30) present therein being disposed at a first end face of the screen drum (4) and a discharge device for the coarse solids (30) being disposed at a second end face of the screen drum (4), and the screen drum (4) being associated with a cleaning device, **characterized in that** at least one spray nozzle (40) is disposed in a region between half the length of the screen drum (4) and the second end face thereof for washing the retained coarse solids (30).

5. The device according to the preceding claim, **characterized in that** the pan (22) comprises a low point (26) at which an outlet opening, particularly a fitting (28), is disposed for the fluid running off, and/or the housing (2) is connected to a second pan (46) for collecting washing fluid and having a low point (50), at which a second outlet opening, particularly a second fitting (52), is disposed for the washing fluid running off, wherein the second pan (46) is disposed behind the first pan (22) for collecting the viscous fluid running off, as seen from an inlet end (5).

6. The device according to one or more of the claims 4 and 5, **characterized in that** the housing (2) comprises a connection (54) for drawing off gases and vapors.

7. The device according to one or more of the claims 4 through 6, **characterized in that** the openings (20) in the shell (18) of the rotating screen drum (4) are perforations having a diameter between 3 and 15 mm, preferably between 6 and 10 mm.

8. The device according to one or more of the claims 4 through 7, **characterized in that** the openings (20) in the shell (18) of the rotating screen drum (4) are particularly annular slits disposed about the axis (7) of the screen drum (4) and having a gap width of 2 to 12 mm, preferably of 4 to 8 mm.

9. The device according to one or more of the claims 4 through 8, **characterized in that** at least one spray nozzle (36) for cleaning the openings (20) in the shell (18) of the screen drum (4) is disposed within the housing (2) and outside of the screen drum (4), particularly in a position between 8 and 12 o'clock when the screen drum (4) rotates clockwise as seen from the end face of the screen drum (4) on the inlet side.

10. The device according to the preceding claim, **characterized in that** at least one further spray nozzle (64) is disposed in a position between 12 and 4 o'clock.

11. The device according to one or more of the claims 9 and 10, **characterized in that** washing fluid is fed to the at least one spray nozzle (36) at a pressure between 2 and 10 bar.

12. The device according to one or more of the claims 4 through 11, **characterized in that** at least one brush (68) for cleaning the openings (20) in the shell (18) of the screen drum (4) is disposed outside of the screen drum (4).

13. The device according to one or more of the claims 4 through 12, **characterized in that** the end of the pipeline (8) comprises a diameter that is 1.25 to 3 times as large as the diameter of the inlet pipeline (8) in order to reduce the speed of the incoming fluid.

14. The device according to one or more of the claims 4 through 13, **characterized in that** the rotational speed of the screen drum (4) can be adjusted variably.

15. The device according to one or more of the claims 4 through 14, **characterized in that** the shell (18) of the screen drum (4) comprises a surface area between 0.2 and 0.4 m² per Us of infeed of the viscous fluid.

## Revendications

1. Procédé pour séparer des corps solides grossiers (30) d'un fluide visqueux, particulièrement d'une boue, sachant que le fluide visqueux et les corps solides grossiers contenus (30) dans ce dernier sont acheminés dans un tambour cribleur (4) rotatif autour d'un axe horizontal ou incliné (7) sur une première face frontale du tambour cribleur (4), sachant que le fluide visqueux s'écoule à travers des ouvertures (20) du tambour cribleur (4) disposées dans une enveloppe rotative (18) du tambour cribleur (4) et qu'il est recueilli au moyen d'une cuve (22) reliée à un carter stationnaire (2), dans lequel est disposé le tambour cribleur (4), sachant que les corps solides grossiers (30) sont retenus dans le tambour cribleur (4) et qu'ils sont transportés vers un point de déversement à une seconde face frontale du tambour cribleur (4) par une tôle hélicoïdale (32) reliée à l'enveloppe rotative (18) dans le tambour cribleur (4), et sachant que le tambour cribleur (4) est nettoyé par un dispositif de nettoyage, **caractérisé en ce que** les corps solides grossiers (30) retenus dans le tambour cribleur (4) sont lavés au sein du tambour cribleur (4) dans la zone entre la moitié de la longueur du tambour cribleur (4) et le point déversement, durant leur évacuation, au moyen d'au moins un gicleur d'arrosage (40) disposé au sein du tambour cribleur (4).

2. Procédé selon la revendication précédente, **caractérisé en ce que** le liquide de lavage injecté via le gicleur d'arrosage (40) s'écoule à travers les ouvertures (20) dans l'enveloppe (18) du tambour cribleur (4).

3. Procédé selon l'une quelconque ou plusieurs des revendications précédentes, **caractérisé en ce que** le fluide visqueux présente une viscosité dynamique ou viscosité dynamique apparente située entre 0,01 et 1 Pa*s, de préférence entre 0,02 et 0,2 Pa*s, et/ou le fluide visqueux présente une teneur en corps solides située entre 0,5 et 6 %.

4. Dispositif pour séparer des corps solides grossiers (30) d'un fluide visqueux, particulièrement d'une boue, sachant que le dispositif comporte un tambour cribleur (4) rotatif autour d'un axe horizontal ou incliné (7), sachant que des ouvertures (20) sont disposées dans une enveloppe (18) du tambour cribleur (4), sachant qu'il existe une tôle hélicoïdale (32) reliée à l'enveloppe rotative (18) dans le tambour cribleur (4), sachant que le tambour cribleur (4) est disposé dans un carter stationnaire (2) qui est relié à une cuve (22) pour la récupération du fluide visqueux évacué, sachant qu'un dispositif d'alimentation pour le fluide visqueux et les corps solides grossiers (30) contenus dans ce dernier est disposé à une première face frontale du tambour cribleur (4) et un dispositif de déversement pour les corps solides grossiers (30) est disposé à une seconde face frontale du tambour cribleur (4), et sachant qu'un dispositif de nettoyage est attribué au tambour cribleur (4), caractérisé en ce qu'au moins un gicleur d'arrosage (40) est disposé au sein du tambour cribleur (4), dans une zone entre la moitié de la longueur du tambour cribleur (4) et sa seconde face frontale, pour le lavage des corps solides grossiers (30) retenus.

5. Dispositif selon la revendication précédente, **caractérisé en ce que** la cuve (22) présente un point bas (26), auquel est disposé une ouverture de décharge, particulièrement une tubulure (28) pour le fluide évacué et/ou le carter (2) est relié à une seconde cuve (46) pour la récupération du liquide de lavage, avec un point bas (50) auquel est disposé une seconde ouverture de décharge, particulièrement une seconde tubulure (52) pour le liquide de lavage évacué, sachant que la seconde cuve (46), vue depuis une extrémité d'admission (5), est disposée derrière la première cuve (22) pour la collecte du fluide visqueux évacué.

6. Dispositif selon l'une quelconque ou plusieurs des revendications 4 et 5, **caractérisé en ce que** le carter (2) comporte un raccord (54) pour l'aspiration de gaz et de vapeurs.

7. Dispositif selon l'une quelconque ou plusieurs des revendications 4 à 6, **caractérisé en ce que** les ouvertures (20) dans l'enveloppe (18) du tambour cribleur rotatif (4) sont des perforations d'un diamètre situé entre 3 et 15 mm, de préférence entre 6 et 10 mm.

8. Dispositif selon l'une quelconque ou plusieurs des revendications 4 à 7, **caractérisé en ce que** les ouvertures (20) dans l'enveloppe (18) du tambour cribleur rotatif (4) sont particulièrement des fentes disposées de manière annulaire autour de l'axe (7) du tambour cribleur (4), avec une largeur de fente de 2 à 12 mm, de préférence de 4 à 8 mm.

9. Dispositif selon l'une quelconque ou plusieurs des revendications 4 à 8, caractérisé en ce qu'au moins un gicleur d'arrosage (36) pour le lavage des ouvertures (20) dans l'enveloppe (18) du tambour cribleur (4) est disposé au sein du carter (2) et hors du tambour cribleur (4), particulièrement à une position entre 8 et 12 heures, si le tambour cribleur (4) tourne dans le sens des aiguilles d'une montre vue depuis la face frontale d'admission du tambour cribleur (4).

10. Dispositif selon la revendication précédente, caractérisé en ce qu'au moins un second gicleur d'arrosage (64) est disposé à une position entre 12 et 4 heures.

11. Dispositif selon l'une quelconque ou plusieurs des revendications 9 et 10, caractérisé en ce qu'un liquide de lavage est alimenté à au moins un gicleur d'arrosage (36) à une pression située en 2 et 10 bars.

12. Dispositif selon l'une quelconque ou plusieurs des revendications 4 à 11, caractérisé en ce qu'une brosse (68) au moins pour le nettoyage des ouvertures (20) dans l'enveloppe (18) du tambour cribleur (4) est disposée hors du tambour cribleur (4).

13. Dispositif selon l'une quelconque ou plusieurs des revendications 4 à 12, **caractérisé en ce qu'**en vue de la réduction de la vitesse du fluide injecté, l'extrémité du conduit de tuyau (8) présente un diamètre qui est de 1,25 à 3 fois supérieur au diamètre du conduit de tuyau d'alimentation (8).

14. Dispositif selon l'une quelconque ou plusieurs des revendications 4 à 13, **caractérisé en ce que** la vitesse de rotation du tambour cribleur (4) est réglable de manière variable.

15. Dispositif selon l'une quelconque ou plusieurs des revendications 4 à 14, **caractérisé en ce que** l'enveloppe (18) du tambour cribleur (4) présente une surface de 0,2 à 0,4 m² par l/s d'affluence de fluide visqueux.
